# EUROPÄISCHE PATENTSCHRIFT

(11) **EP 1 003 962 B1**
(45) Veröffentlichungstag und Bekanntmachung des Hinweises auf die Patenterteilung: **10.07.2002**
(21) Anmeldenummer: 98945152.1
(22) Anmeldetag: 05.08.1998
(51) Int. Cl.: F02M 31/06

(54) **VORRICHTUNG ZUR REGELUNG DER TEMPERATUR DER ANSAUGLUFT VON GEMISCHVERDICHTENDEN BRENNKRAFTMASCHINEN MIT EINER DRUCKDOSE**
DEVICE FOR REGULATING THE TEMPERATURE OF THE INTAKE AIR OF MIXED COMPRESSION INTERNAL COMBUSTION ENGINES WITH A PRESSURE BOX
DISPOSITIF PERMETTANT DE REGULER LA TEMPERATURE DE L'AIR D'ASPIRATION DE MOTEURS A COMBUSTION INTERNE A COMPRESSION DE MELANGE

(30) Priorität: 11.08.1997 DE 19734662
(43) Veröffentlichungstag der Anmeldung: 31.05.2000
(73) Patentinhaber: FILTERWERK MANN & HUMMEL GmbH, 71631 Ludwigsburg (DE)
(72) Erfinder: JESSBERGER, Thomas, D-71277 Rutesheim (DE); KARLSSON, Jan, S-421 66 Västra Frölunda (SE)
(74) Vertreter: Voth, Gerhard, Dipl.-Ing.
(86) Internationale Anmeldenummer: EP9804887
(87) Internationale Veröffentlichungsnummer: WO9907989

(56) Entgegenhaltungen:
- EP-A- 0 589 153
- DE-A- 2 624 210
- US-A- 3 774 919
- US-A- 4 878 766

## Beschreibung

### Stand der Technik

Die Erfindung betrifft eine Vorrichtung zu Regelung der Temperatur der Ansaugluft von gemischverdichtenden Brennkraftmaschinen mit einer Druckdose, wobei in die Druckdose ein bewegliches Teil hineinragt, nach dem Oberbegriff des Hauptanspruchs.

Es sind Dichtsysteme bekannt, bei denen Kunststoff- oder Gummiringe in der Druckdose angebracht sind, die das bewegliche Teil druckdicht umschließen. Auch ist für sich gesehen bekannt ein bewegliches Teil in Kunststoffgleitlagern zu führen.

Aus der DE 26 24 210 C2 ist eine Vorrichtung der gattungsgemäßen Art bekannt, bei der zur Regelung der Temperatur der Ansaugluft von gemischverdichtenden Brennkraftmaschinen eine im Rohluftstutzen eines Ansaugluftfilters schwenkbare Steuerklappe mit einem pneumatischen Stellmotor, bzw. einer Druckdose, zusammenwirkt. In einer Endlage wird über eine einen Steuerdruckraum durchsetzende Rückstellfeder ein Warmluftkanal bei Unterschreiten eines Sollunterdruckes abgeschlossen und gleichzeitig ein Kaltluftkanal aufgesteuert, wobei der Steuerdruckraum des Stellmotors über eine Steuerdruckleitung mit dem stromab einer willkürlich betätigbaren Hauptdrosselklappe liegenden Abschnitt des Ansaugkanals verbunden ist. Die Steuerdruckieitung weist ein temperaturabhängig betätigtes Ventil auf, das einen von einem Bimetall betätigten Ventilkörper beinhaltet, und den Ventilkörper, bei Erreichen der Solltemperatur in Offenstellung bewegt um eine Verbindung zum Reinluftraum des Ansaugluftfilters aufzusteuern.

Eine derartige Vorrichtung dient dazu, die Temperatur der Ansaugluft für die Brennkraftmaschine innerhalb eines bestimmten Bereiches zu halten. Lediglich bei geöffneter Hauptdrosselklappe, also bei Vollastbetriebszuständen, soll die Brennkraftmaschine kältere Luft ansaugen, damit ein besserer Füllungsgrad und eine höhere Leistung erreicht sind.

Die Führung der Antriebsstange von der Druckdose als Stellmotor zu der schwenkbaren Steuerklappe ist hierbei problematisch, da nicht nur Kräfte in der Schubrichtung auftreten sondern auch seitliche Auslenkungen aufzufangen sind.

### Aufgabenstellung

Der Erfindung liegt die Aufgabe zugrunde, eine Vorrichtung der eingangs genannten Art so fortzubilden, dass bei guter Abdichtung des in die Druckdose hineinführenden mechanischen Teils eine gute Führung und die mechanische Beweglichkeit des Teils gewährleistet ist.

### Vorteile der Erfindung

Die erfindungsgemäße Vorrichtung der gattungsgemäßen Art ermöglicht in vorteilhafter Weise mit einer Kombination der Merkmale des Kennzeichens des Anspruchs 1 einen einfachen Aufbau der Steuerung einer schwenkbaren Stellklappe durch eine Druckdose im Ansaugkanal, wobei in der Öffnung in der Druckdose, durch die ein bewegliches mechanisches Teil in das Innere der Druckdose hineinführbar ist, eine gute Abdichtung erfolgt und gleichzeitig die Bewegbarkeit und Führung des mechanischen Teils gewährleistet ist.

Eine Antriebsstange ist erfindungsgemäß aus, um eine zusätzliche Achse schwenkbaren Elementen als mechanisches Teil gebildet. Das gesamte Dichtund Führungssystem ist in vorteilhafter Weise aus einem über eine vorgegebene Länge am beweglichen Element des mechanischen Teils anliegenden Kunststoffgleitlager gebildet, das über das Dichtsystem insgesamt in der Öffnung der Druckdose fest verankert ist und an einem Ende des Kunststoffgleitlagers ist ein Teflonring im Dichtsystem angeordnet, der das bewegliche Teil druckdicht umschließt.

Bei einer vorteilhaften Ausführungsform ist außen um den Teflonring ein Ring aus Elastomer im Dichtsystem angeordnet ist, der den Teflonring fest umspannt. Solche Kombinationen aus einem Dichtring und einem den Dichtring umspannenden Element sind für sich gesehen bei normalen Kolbenführungen bekannt, z.B. aus der US-PS 4,878,766. Nach der Erfindung spielen jedoch die Besonderheiten bei Druckdosen hinsichtlich der spezifischen Kombination der Wirkung der Abdichtung und der unvermeidbaren seitlichen Auslenkung der Antriebsstange und der damit auftretenden spezifischen Führungsprobleme eine große Rolle. Ein einfacher Einbau der Vorrichtung in ein Ansaugsystem für eine Brennkraftmaschine ist erreichbar, wenn die Unterdruckdose über einen Bajonettverschluss in den Rohluftstutzen integrierbar ist.

Die Unterdruckdose übernimmt in vorteilhafter Weise beim zuvor beschriebenen Ausführungsbeispiel für das Gestänge, wie erwähnt, Führungsaufgaben, wodurch hier auf eine gesonderte Lagerstelle im Saugrohrgehäuse verzichtet werden kann. Durch das abgedichtete Gestänge, insbesondere gegenüber dem Saugrohrunterdruck, ist es möglich, die Unterdruckdose einfach und direkt in ein Saugrohrgehäuse zu montieren.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Eine bekannte Vorrichtung und ein Ausführungsbeispiel der erfindungsgemäßen Vorrichtung werden anhand der Zeichnung erläutert. Es zeigen:
Figur 1 ein schematisches Schaubild einer Vorrichtung zur Regelung der Temperatur der Ansaugluft von gemischverdichtenden Brennkraftmaschinen nach dem Stand der Technik und
Figur 2 einen Schnitt durch eine erfindungsgemäße Vorrichtung mit einem Dicht- und Führungssystem für eine Antriebsstange zwischen einer Druckdose und einer Stellklappe.

### Beschreibung des Ausführungsbeispiels

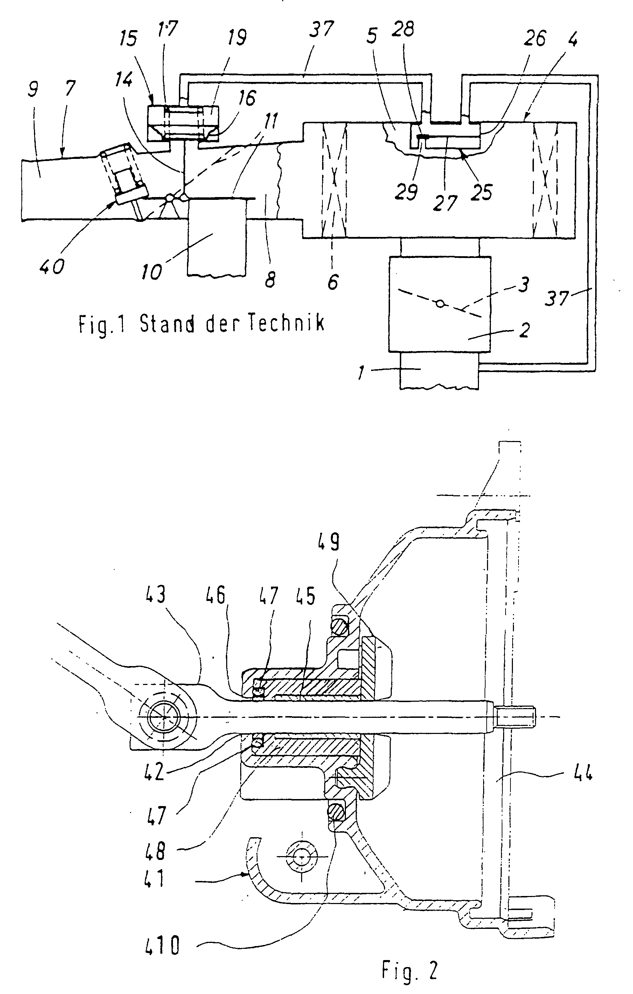

Figur 1 zeigt eine schematische Vorrichtung nach dem Stand der Technik für eine hier nicht dargestellte Brennkraftmaschine mit einem Ansaugkanal 1, der einen Vergaser 2 mit einer willkürlich betätigbaren Hauptdrosselklappe 3 trägt. Auf den Vergaser 2 ist ein Ansaugluftfilter 4 mit einem ringförmigen, radial von außen nach innen durchströmten, einen Reinluftraum 5 umschließenden Filtereinsatz 6 und einem Ansaugrohr 7 aufgesetzt. Das Ansaugrohr 7 weist einen Rohluftstutzen 8 auf, in den ein Kaltluftkanal 9 und ein Warmluftkanal 10 einmünden. Die Warmluft wird durch eine nicht dargestellte Warmluftleitung von der Nähe des Auspuffrohres der Brennkraftmaschine her dem Warmluftkanal 10 zugeführt.

Bei der bekannten Vorrichtung nach der Figur 1 greift die Antriebsstange 14 eines pneumatischen Stellmotors 15, hier eine Druckdose, an einer in dem Rohluftstutzen 8 schwenkbar angeordneten Steuerklappe 11 mit einem Anschlaghebel 12 und einer Schwenkachse 13 an. Der Stellmotor 15 enthält eine Gummimembran 16 und eine einen Steuerdruckraum 19 durchsetzende Rückstellfeder 17 und ist über eine Steuerdruckleitung 37 stromabwärts der Hauptdrosselklappe 3 des Vergasers 2 an den Ansaugkanal 1 der= Brennkraftmaschine angeschlossen. Die Steuerklappe 11 ist durch den pneumatischen Stellmotor 15 gegen die Kraft der Rückstellfeder 17 aus ihrer ausgezogen gezeigten Endstellung, in der sie den Warmluftkanal 10 abschließt und gleichzeitig den Kaltluftkanal 9 öffnet, in ihre andere, gestrichelt dargestellte Endstellung schwenkbar, in der sie den Kaltluftkanal 9 abschließt und den Warmluftkanal 10 öffnet.

Die Steuerdruckleitung 37 enthält ein als temperaturabhängig betätigtes Ventil 25 ausgebildetes Belüftungsventil. Im Ventilgehäuse 26 ist ein Bimetall 27 einseitig festgelegt, das an seinem freien Ende einen Ventilkörper 28 trägt. Der Ventilkörper 28 steuert bei Erreichen der Solltemperatur eine Verbindung 29 zum Reinluftraum 5 des Ansaugluftfilters 4 auf. Die Übertragung der Temperatur vom Reinluftraum 5 auf das Bimetall 27 erfolgt durch eine nicht dargestellte, im Verhältnis zur Verbindung 29 kleine Öffnung, die in bekannter Weise einen die Druckverhältnisse nur unwesentlich beeinflussenden Luftstrom vom Reinluftraum 5 in das Innere des Ventilgehäuses 26 zulässt.

Im Kaltluftkanal 9 ist ein als Wachsthermostat ausgebildeter Thermostat 40 quer zur Schwenkachse 13 und im wesentlichen quer zur Strömungsrichtung der angesaugten Luft angeordnet. Der Thermostat 40 hat ein Gehäuse und einen Antriebsstift. Er stützt sich einerseits mit dem Gehäuse über eine Druckfeder und andererseits mit dem Antriebsstift an der Innenwandung des Kaltluftkanals 9 ab, der hierzu an den Anlagestellen von der Druckfeder und dem Antriebsstift nach außen ausgewölbt ist. Das Gehäuse des Thermostats 40 bildet einen bewegbaren Anschlag, der den Schwenkbereich der Steuerklappe 11 in der den Warmluftkanal 10 abschließenden Richtung festlegt.

Während des Betriebs der Brennkraftmaschine herrscht in dem ganzen Ansaugsystem ein Unterdruck, der im Ansaugkanal 1 am größten ist und zum Kaltluftkanal 9 hin abnimmt. Der große Unterdruck des Ansaugkanals 1 wird durch die Steuerdruckleitung 37 in den Steuerdruckraum 19 des pneumatischen Stellmotors 15 oberhalb der Gummimembran 16 übertragen. Dort übt er entsprechend den auf beiden Seiten der Gummimembran 16 herrschenden Unterdrücken und entsprechend der Membranfläche eine Kraft zum Verstellen der Steuerklappe 11 aus. Einen wesentlichen Einfluss auf die Druckverhältnisse in der Steuerdruckleitung hat außerdem die Luft, die durch die Verbindung 29 In das Thermostatventil 25 und somit in die Steuerdruckleitung 37 gelangen kann, wenn das Bimetall 27 sich oberhalb einer vorbestimmten Temperatur nach oben weggebogen und der Ventilkörper 28 die Verbindung 29 geöffnet hat.

Bei geschlossener Hauptdrosselklappe, beispielsweise im Leerlaufbetrieb, ist der Unterdruck im Ansaugkanal 1 besonders groß. Wenn dann bei entsprechend niedriger Temperatur der angesaugten Luft die Verbindung 29 geschlossen ist, vermag der im pneumatischen Stellmotor 15 oberhalb der Gummimembran 16 auftretende große Unterdruck die Steuerklappe 11 gegen die Kraft der Rückstellfeder 17 in die gestrichelt gezeichnete Stellung zu schwenken, bei der sie den Kaltluftkanal 9 verschließt und den Warmluftkanal 10 geöffnet hat. Überschreitet die Temperatur der Luft, die durch den Warmluftkanal 10 in den Rohluftstutzen 8 eintritt und nach Durchqueren des Filtereinsatzes 6 in den Reinluftraum 5 gelangt und damit das Thermostatventil 25 beeinflusst, einen vorbestimmten Wert, so beginnt sich das Bimetall 27 nach oben zu krümmen. Der Ventilkörper 28 gibt die Verbindung 29 zum Reinluftraum 5 frei, und es kann zusätzlich Reinluft in die Steuerdruckleitung 37 eindringen und dort den Unterdruck abbauen. Als Folge davon schwenkt die Steuerklappe 11 von ihrer den Kaltluftkanal 9 verschließenden Endstellung so weit weg, bis die Mischluft die Temperatur hat, bei der sich ein Gleichgewichtszustand zwischen der Kraft der Rückstellfeder 17 einerseits und den an der Gummimembran 16 des pneumatischen Stellmotors 15 sowie an der Steuerklappe 11 auftretenden Kräften andererseits einstellt.

Mit zunehmendem Öffnen der Hauptdrosselklappe 3 des Vergasers 2 verringert sich der Unterdruck in dem Ansaugkanal 1. Bei vollständig geöffneter Hauptdrosselklappe 3 ist der Unterdruck im Ansaugkanal 1 und damit im Steuerdruckraum 19 des pneumatischen Stellmotors 15 so gering, dass er nicht mehr ausreicht, um die Kraft der Rückstellfeder 17 zu überwinden. Oberhalb einer vorbestimmten Temperatur der durch den Kaltluftkanal 9 einströmenden Luft ist der Warmluftkanal 10 dann auf jeden Fall geschlossen und die Brennkraftmaschine erhält nur Luft durch den Kaltluftkanal 9. Die sich durch Abschließen des Warmluftkanals 10 ergebende geringere Temperatur der Ansaugluft führt zu einem besseren Füllungsgrad der Maschine, so dass gerade im Volllastbetrieb eine bessere Leistung erzielt ist.

Unterschreitet jedoch die durch den Kaltluftkanal 9 angesaugte Luft die vorbestimmte Temperatur, so verschiebt sich das Gehäuse des Thermostats 40 mit dem bewegbaren Anschlag so weit nach unten, daß bei der Bewegung der Steuerklappe 11 in der den Warmluftkanal 10 abschließenden Richtung schließlich der Anschlaghebel 12 gegen den bewegbaren Anschlag anstößt, bevor der Warmluftkanal 10 vollkommen abgeschlossen ist. In dieser Stellung der Steuerklappe 11 wird noch etwas Warmluft zugemischt, so daß die Mischluft einen gewünschten Wert nicht unterschreitet und beispielsweise die gefürchtete Vergaservereisung sicher vermieden ist.

In Figur 2 ist eine erfindungsgemäße Druckdose bzw. eine Unterdruckdose 41 als pneumatischer Stellmotor entsprechend dem Stellmotor 45 nach der Figur 1 dargestellt, in die durch eine Öffnung 42 ein bewegliches mechanisches Teil 43 als Antriebsstange hineinragt, das über eine Druckmembran 44 verstellbar ist. In der Öffnung 42 der Unterdruckdose 41 befindet sich ein Dichtsystem, das aus einem Kunststoffgleitlager 45, einem Teflonring 46 und einem Elastomerring 47 besteht.

Das sich axial über eine vorgegebene Länge erstreckende Kunststoffgleitlager 45 umschließt das mechanische Teil 43 derart, dass eine gute und dauerhafte Beweglichkeit gewährleistet ist. Die notwendige Druckabdichtung wird mittels des Teflonrings 46 erreicht der hier relativ fest am mechanischen Teil 43 anliegt. Zur Verstärkung des Anpressdrucks ist der Elastomerring 47 außen um den Teflonring 46 herumgelegt. Das Dichtsystem ist in eine Lagerschale 48 eingebettet, die über ein Befestigungselement 49 an der Öffnung 42 der Unterdruckdose 41 gehalten ist. Die gesamte Druckdose 41 kann beispielsweise über eine Dichtung 410 und einen hier nicht gezeigten Bajonettverschluss in ein Saugrohrgehäuse für einen Verbrennungsmotor integriert werden.

## Patentansprüche

1. Vorrichtung zur Regelung der Temperatur der Ansaugluft von gemischverdichtenden Brennkraftmaschinen, mit einer im Rohluftstutzen (8) eines Ansaugluftfilters schwenkbaren Steuerklappe (11) und mit:
einer Druckdose (41) zur Steuerung der Steuerklappe (11), wobei die Steuerung über eine Antriebsstange durchführbar ist, die zwischen der Membran (44) der Druckdose (41) und der Steuerklappe (11) angeordnet ist, **dadurch gekennzeichnet, dass**
die Antriebsstange aus um eine zusätzliche Achse schwenkbaren Elementen als mechanisches Teil (43) besteht, deren eines Element durch eine Öffnung (42) an der Druckdose (41) in das Innere der Druckdose (41) hineinführbar ist, wobei das Dichtsystem die Druckdose (41) am beweglichen mechanischen Teil (43) abdichtet, dass
das Dichtsystem aus einem über eine vorgegebene Länge am beweglichen Teil (43) anliegenden Kunststoffgleitlager (45) besteht, das über das Dichtsystem in der Öffnung (42) der Druckdose (41) fest verankert ist und dass
an einem Ende des Kunststoffgleitlagers (45) ein Teflonring (46) im Dichtsystem angeordnet ist der das bewegliche Teil (43) druckdicht umschließt, wobei das bewegliche Teil (43) in der Druckdose (41) mechanisch geführt ist.

2. Vorrichtung nach Anspruch 1, **dadurch gekennzeichnet, dass**
- außen um den Teflonring (46) ein Ring aus Elastomer (47) im Dichtsystem angeordnet ist, der den Teflonring (46) fest umspannt.

3. Vorrichtung nach Anspruch 1 oder 2, **dadurch gekennzeichnet, dass**
die Unterdruckdose (41) über einen Bajonettverschluss in den Rohluftstutzen (8) integrierbar ist.

## Claims

1. Apparatus for regulating the temperature of the intake air of mixture-compressing internal combustion engines, said apparatus having a control flap (11), which is pivotable in the unfiltered air conduit (8) of an intake air filter, and having
a pressure box (41) for controlling the control flap (11), the control being accomplishable via a drive rod, which is disposed between the diaphragm (44) of the pressure box (41) and the control flap (11),
**characterised in that**
the drive rod comprises, as the mechanical part (43), members which are pivotable about an additional axis, one of which members is insertable into the interior of the pressure box (41) through an opening (42) in the pressure box (41), the sealing system sealing the pressure box (41) at the displaceable, mechanical part (43), **in that**
the sealing system comprises a plastics material friction bearing (45), which abuts against the displaceable part (43) over a prescribed length, and which bearing is securedly anchored in the opening (42) of the pressure box (41) via the sealing system, and **in that**
a Teflon ring (46) is disposed in the sealing system at one end of the plastics material friction bearing (45), which ring surrounds the displaceable part (43) in a pressure-tight manner, the displaceable part (43) being mechanically guided in the pressure box (41).

2. Apparatus according to claim 1, **characterised in that**
- a ring of elastomeric material (47) is disposed in the sealing system externally around the Teflon ring (46) and firmly tensions the Teflon ring (46).

3. Apparatus according to claim 1 or 2, **characterised in that**
the vacuum box (41) is incorporatable in the unfiltered air conduit (8) via a bayonet-type locking means.

## Revendications

1. Dispositif permettant de réguler la température de l'air d'admission de moteurs à combustion interne à mélange compressé, comprenant un clapet de commande (11) monté dans la tubulure d'air brut (8) d'un filtre d'admission ainsi qu'une boîte de pression( 41) pour commander le clapet de commande (11) par l'intermédiaire d'une tige d'entraînement montée entre la membrane (44) de la boîte de pression (41) et le clapet de commande (11),
**caractérisé en ce que**
- la tige d'entraînement en tant que partie mécanique (43) est composée d'éléments basculant autour d'un axe supplémentaire et dont l'un peut, en traversant une ouverture (42) de la boîte de pression (41) pénétrer à l'intérieur de celle-ci avec étanchéité de la boîte de pression( 41) assurée par un système d'étanchéité le long de la partie mécanique mobile (43),
- le système d'étanchéité est composé d'un palier de glissement (45) en matière plastique en contact sur une longueur donnée avec la partie mobile (43), ce palier étant ancré solidement par le système d'étanchéité dans l'ouverture (42) de la boîte de pression (41), et
- dans le système d'étanchéité, à une extrémité de palier de glissement (45) est montée une bague en Téflon (46) qui entoure avec étanchéité à la pression la partie mobile (43) qui est guidée mécaniquement dans la boîte de pression (41).

2. Dispositif selon la revendication 1,
**caractérisé en ce que**
la bague de Téflon (46) est extérieurement entourée par une bague (47) en élastomère qui est montée dans le système d'étanchéité enserrant fermement la bague en Téflon (46).

3. Dispositif selon les revendications 1 ou 2,
**caractérisé en ce que**
la boîte de dépression (41) peut être intégrée à la tubulure d'air brut (8) au moyen d'une fermeture à baïonnette.
